# FASCICULE DE BREVET EUROPEEN

(11) **EP 0 419 388 B1**
(45) Date de publication et mention de la délivrance du brevet: **08.06.1994**
(21) Numéro de dépôt: 90440074.4
(22) Date de dépôt: 23.08.1990
(51) Int. Cl.: A01B 49/02

(54) **Machine préparatrice de sols**
Bodenbereitungsmaschine
Machine for soil preparation

(30) Priorité: 23.08.1989 FR 8911163
(43) Date de publication de la demande: 27.03.1991
(73) Titulaire: M.G.M. SàRL, F-78680 Epone (FR)
(72) Inventeur: Crété Guérin, Adolphe, F-78970 Mézières S/Seine (FR)

(56) Documents cités:
- DE-A- 2 601 234
- DE-A- 2 818 274
- FR-A- 2 404 381
- FR-A- 2 622 386
- GB-A- 2 163 932

## Description

La présente invention concerne les machines compactes qui hersent et roulent le sol en un seul passage, en particulier pour le travail direct des terres mises en place par des engins de travaux publics, comme c'est le cas notamment dans la réalisation de terrains de golf.

Des machines de ce type sont connues, par exemple, par le brevet français FR-A-2149279. Elles comportent notamment, en combinaison, un outil adéquat de préparation du sol, par exemple une herse animée, un rouleau brise-mottes monté derrière la herse et une lame niveleuse qui répartit les surépaisseurs du sol devant la herse.

Ces machines connues exigent, dans le cas des terrains vallonnés, une surveillance constante de l'opérateur pour assurer un travail précis. En effet, c'est par appréciation visuelle que l'on doit régler la position de l'outil de préparation du sol, en tenant compte de l'inclinaison de la lame niveleuse liée à cet appareil.

Un des buts de l'invention est d'assurer une précision sans intervention de l'opérateur et elle prévoit à cet effet que, sur le bâti commun portant le rouleau brise-mottes et l'outil de préparation du sol, est monté derrière la lame niveleuse un second rouleau d'axe parallèle à ladite lame niveleuse et disposé, par rapport audit outil de préparation, du côté opposé à celui du premier rouleau et que la lame niveleuse est montée réglable en hauteur par rapport au plan contenant les axes des deux rouleaux.

Ainsi, au moins dans les terrains légèrement vallonnés, la profondeur de travail de l'outil de préparation peut être réglée avec précision par rapport au plan d'appui sur le sol des deux rouleaux.

On connait déjà une machine correspondant au préambule de la revendication 1 (FR-A-2622386).

L'invention, telle qu'elle est caractérisée dans la revendication 1 permet également d'assurer une grande précision de travail dans le cas de forts vallonnements de terrains, l'outil de préparation étant à cet effet monté réglable en hauteur par rapport au bâti sur un support dont le déplacement est commandé manuellement ou automatiquement par l'intermédiaire de détecteurs de distance au sol.

Ces détecteurs peuvent être optiques ou de préférence mécaniques, et consister par exemple en des palpeurs en forme de roues ou rouleaux évoluant à proximité immédiate devant les outils.

La lame niveleuse, réglable en hauteur, est montée à l'extrémité de deux bras latéraux d'un châssis pivotant articulé sur le bâti autour d'un axe situé en arrière de l'axe du rouleau avant.

La machine selon l'invention peut évidemment être attelée à un tracteur, en principe par un attelage 3 points. Ce peut être alors le châssis porteur de la lame niveleuse qui assure l'attelage au tracteur classique, et la machine peut être portée, semi-portée ou traînée.

Du fait des inclinaisons inverses, de grandes amplitudes, pouvant être prises par la machine et le tracteur, l'invention prévoit aussi l'utilisation, à la place de l'attelage classique, d'un attelage oscillant tous azimuts permettant le braquage et l'évolution sans contrainte sur les bras de relevage du tracteur et sur la machine, la laissant ainsi suivre parfaitement les formes du terrain, bien assise sur ses deux rouleaux dans les devers importants.

Cet attelage oscillant peut être réalisé en reliant à la machine les bras de relevage du tracteur, non plus directement au châssis niveleur, mais par l'intermédiaire d'une pièce intermédiaire montée pivotante, autour d'un axe parallèle à la face avant du châssis niveleur, sur une tige cylindrique montée coulissante sur le châssis, perpendiculairement à la face avant, des moyens étant prévus sur le châssis et la pièce intermédiaire pour venir en prise, dans une certaine position de la tige, et empêcher alors tout pivotement de la pièce intermédiaire autour de l'axe de la tige.

La machine peut aussi être rendue autonome en rendant moteur au moins un des rouleaux et l'autre inclinable par rapport à lui et désaxable horizontalement. On peut alors prévoir dans le rouleau moteur un moteur hydraulique actionné, par l'intermédiaire d'une pompe, par un moteur thermique placé sur le bâti.

La suppression du tracteur évite alors le passage nuisible des roues dans la terre décompactée, permet un travail moins profond en passe de finition et facilite le franchissement des buttes.

D'autres caractéristiques de la machine selon l'invention ressortiront de la description ci-dessous d'un exemple de réalisation donné à un titre nullement limitatif en se référant au dessin annexé dans lequel :
- la figure 1 est une vue en élévation latérale d'une machine selon l'invention attelée à un tracteur ;
- la figure 2 est une vue en plan de dessus, à plus grande échelle, de la machine de la figure 1, avec tracteur à bras de relevage inférieurs non rigides l'un par rapport à l'autre ;
- la figure 3 est une vue en coupe de la même machine, selon la ligne III-III de la figure 2 ;
- la figure 4 est une vue frontale de la même machine, en direction de la flèche A de la figure 2 ;
- la figure 5 est une vue en coupe, similaire à celle de la figure 3, d'une variante du système de réglage en hauteur des outils ;
- la figure 6 est une vue partielle de la machine de la figure 2, reliée au tracteur par un attelage oscillant ;
- les figures 7 à 9, sont des vues de détail du système d'attelage oscillant ;
- la figure 10 est une vue schématique illustrant les positions d'une machine selon l'invention en différents points d'un terrain à forts vallonnements ;
- les figures 11a et 11b sont des vues en élévation latérale d'une machine autonome selon l'invention, positionnée respectivement au sommet d'une butte et dans une cuvette.

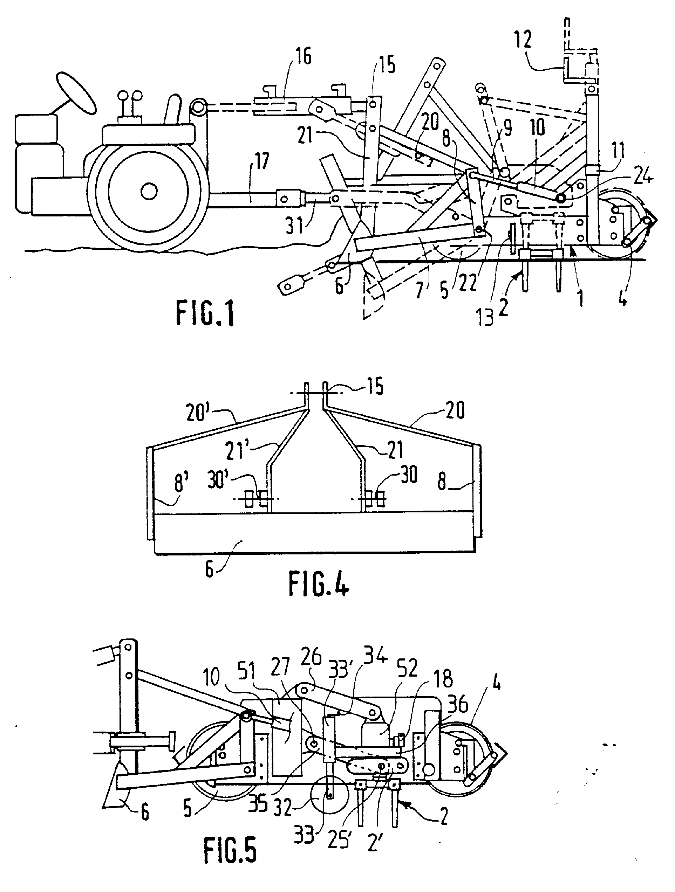

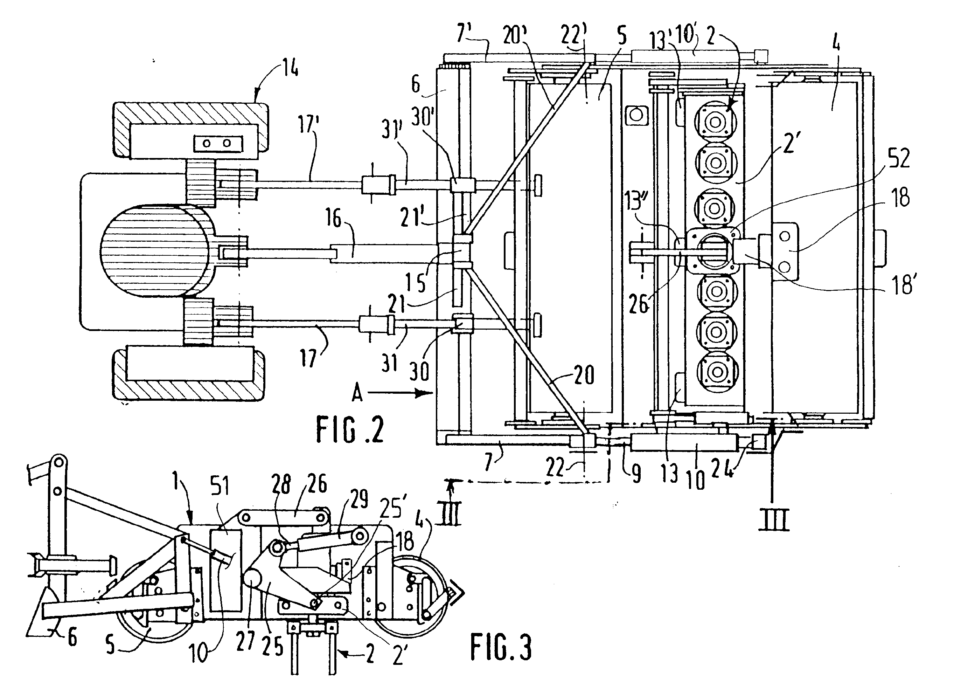

Si on se réfère d'abord aux figures 1 et 2, on ne voit que le bâti 1 de la machine selon l'invention porte un ensemble d'outils de travail 2 constitués ici par des herses rotatives montées sur un support réglable en hauteur et qui sera décrit plus loin. De chaque côté de cet ensemble d'outils 2, le bâti 1 porte un rouleau arrière brise-mottes 4 et un rouleau avant 5 parallèle et identique au rouleau 4. Une lame niveleuse 6 s'étendant parallèlement aux deux rouleaux est montée à l'extrémité de deux bras 7, 7′ latéraux d'un châssis comprenant deux montants latéraux 8, 8′, deux tirants 20, 20′ et deux profilés verticaux 21, 21′. Ce châssis est articulé sur le bâti 1 autour d'axes 22, 22′ et, à la partie supérieure des montants 8, 8′, sont articulées les extrémités des tiges 9, 9′ de vérins 10, 10′, eux-mêmes articulés autour d'axes 24, 24′ sur le bâti 1. Sur la figure 1, sont indiquées trois positions du châssis de la lame niveleuse.

Le rouleau arrière 4 est porté sur le bâti 1 par l'intermédiaire de montants coulissants 11 commandés par des manivelles 12 et qui permettent un réglage en hauteur des herses 2 par rapport au rouleau arrière 4, le rouleau avant 5 étant solidaire du rouleau arrière 4 par l'intermédiaire du bâti 1.

Les herses ou houes rotatives 2 sont commandées, dans ce mode de réalisation, par un moteur hydraulique 18 qui remplace avantageusement la transmission classique à cardans, inutilisable dans les forts vallonnements. Le moteur hydraulique 18 est monté sur le corps 2′ des herses 2, étant solidarisé au renvoi d'angle 52 des herses 2 par l'intermédiaire d'une pièce d'accouplement 18′.

Le corps 2′ des herses 2 est réglable en hauteur par un ensemble (figure 3) de leviers 25 formant parallélogramme avec au moins une biellette 26 et articulés par des axes 27 sur le bâti 1. Ces leviers 25 sont commandés par les tiges 28 de vérins 29 à double effet.

La biellette 26 peut être un vérin hydraulique double effet, commandé manuellement en vue de régler l'inclinaison des herses 2 par rapport au châssis 1.

En outre, il est prévu un réglage automatique de la profondeur de travail du sol au moyen de trois détecteurs optiques 13, 13′, 13˝ de distance du sol situés de chaque côté et au milieu, derrière le rouleau avant 5. Ces détecteurs commandent les vérins double effet 29 qui maintiennent en permanence la profondeur de travail, déterminée au départ par réglage de la hauteur des détecteurs et modifiable en cours de travail.

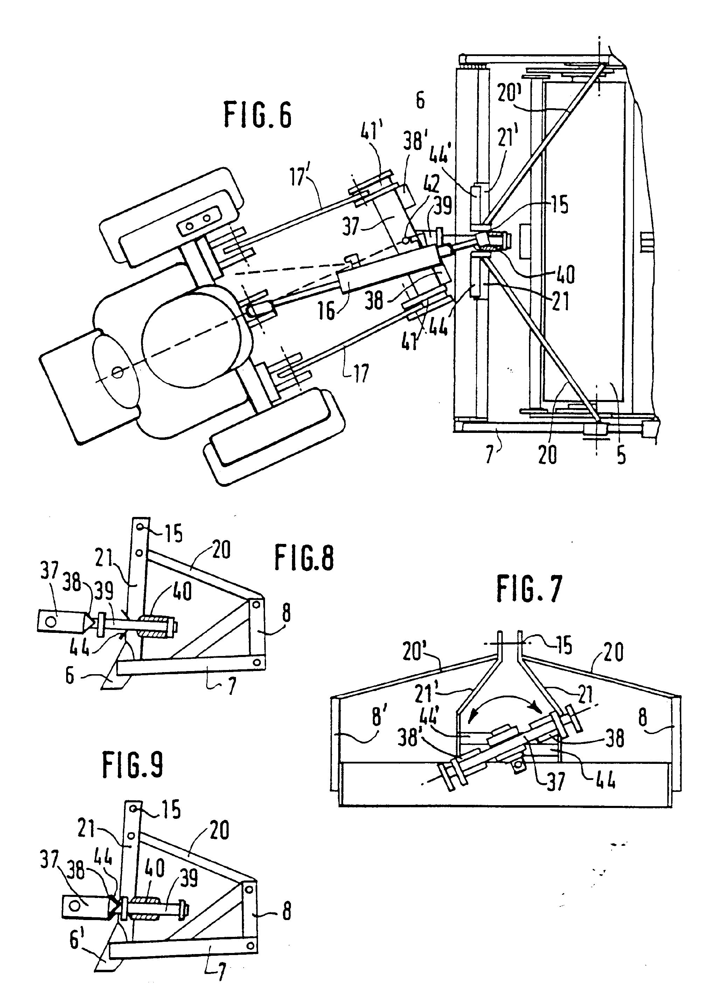

Sur la figure 5 est représenté une variante de la machine selon l'invention, dans laquelle un rouleau palpeur 32 se substitue aux détecteurs optiques 13, 13′, 13˝. Le rouleau est monté sur une tige 33 réglable en hauteur par une manivelle 34 (remplaçable par au moins un vérin hydraulique à commande manuelle) et coulissant dans un fourreau 33′ solidaire d'une traverse horizontale 36 elle-même solidaire du corps 2′ des herses 2. Lorsque le rouleau 32 est soulevé par un accident de terrain, le déplacement en translation verticale de la tige 33 et du fourreau 33′ entraîne le relevage des herses 2, rendu possible par le pivotement des bras 26 et 35 d'un parallélogramme déformable, le bras 35 étant monté pivotant autour de deux axes dont l'un 25′ est solidaire du corps 2′ des herses 2 et l'autre 27 est solidarisé au réservoir d'huile 51 alimentant le moteur hydraulique 18, tandis que le bras 26 est monté pivotant autour de deux axes dont l'un est solidarisé au réservoir 51 et l'autre au renvoi d'angle 52 des herses 2.

La machine est ici reliée à un tracteur 14 par un attelage 3 points dont le troisième point 15 est l'extrémité d'un vérin double effet 16 qui peut être rendu flottant par "by-pass".

L'extrémité du vérin 16 est accouplable en 15 à la partie supérieure du châssis de la lame niveleuse (figure 4) et les bras d'attelage inférieurs 17, 17′ sont accouplés en 30, 30′ aux profilés 21, 21′ du même châssis par des barreaux coulissants 31, 31′, rendant ainsi l'attelage inférieur rétractable.

Cet agencement permet, dans le cas où les bras inférieurs 17, 17′ ne sont pas rigides l'un par rapport à l'autre, un braquage important de la machine avec une certaine oscillation latérale.

Dans le cas des tracteurs classiques, l'attelage peut être remplacé par l'attelage oscillant de l'invention décrit à l'appui des figures 6 à 9.

Comme dans le mode de réalisation représenté aux figures 1 à 5, la machine est reliée au tracteur par l'intermédiaire d'un châssis niveleur de même structure, du vérin 16 du 3e point 15 et des bras de relevage inférieurs 17, 17′. Mais les extrémités de ces bras ne sont pas accouplés directement aux montants 21, 21′ du châssis niveleur. Ils sont accouplés respectivement aux extrémités 41, 41′ d'un plateau mobile 37 dont la face tournée vers la machine est munie de profilés 38, 38′ en V.

Ce plateau 37 est monté pivotant autour d'un axe 42 sur un arbre 39 cylindrique monté coulissant dans un palier 40 disposé entre les montants 21, 21′ du châssis niveleur.

De part et d'autre de ce palier 40 sont prévus, sur les montants 21, 21′ du châssis, des profilés en V 44, 44′ destinés à coopérer avec les profilés en V 38, 38′ du plateau 37.

Comme on le voit sur la figure 9, qui est une vue latérale de l'attelage en position de transport, le vérin 16 et les bras de relevage 17 étant fixés au tracteur, lors du relevage de l'ensemble par les bras 17, tout le poids de la machine repose sur les profilés en V 38, 38′ et 44, 44′ qui s'emboîtent parfaitement en pratiquant une traction sur le point 15, interdisant toute oscillation de la machine, la rendant solidaire du relevage trois points d'attelage du tracteur.

En position de travail (figure 8) le plateau mobile 37 et les profilés 38, 38′, sous l'effet de la traction, s'écartent des profilés 44, 44′, rendant le plateau 37 et l'arbre 39 libres d'osciller, et permettant les oscillations tous azimuts du châssis niveleur (figure 7), l'arbre 39 pouvant être la tige d'un vérin à double effet dont le palier 40 serait le cylindre.

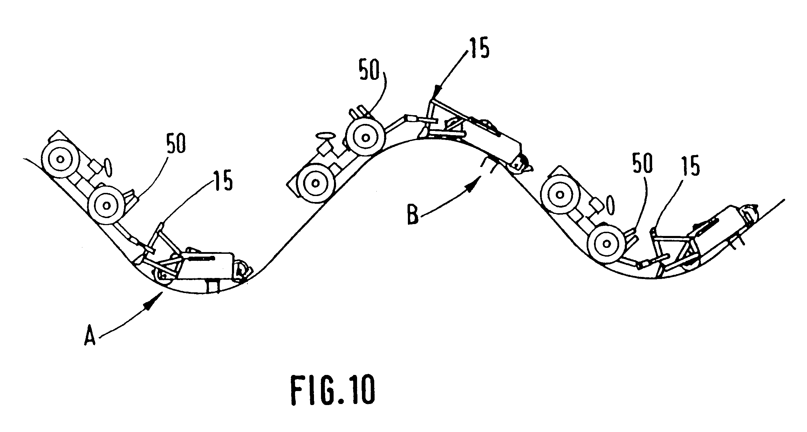

La vue schématique de la figure 10 illustre différentes positions susceptibles d'être prises par la machine selon l'invention sur un terrain fortement vallonné.

Elle montre clairement l'intérêt ou la nécessité d'assurer en permanence le réglage en position de la lame niveleuse et de l'outil de préparation du sol. Elle montre aussi comment la machine selon l'invention s'adapte bien, grâce à ses deux rouleaux, aux terrains comportant des creux et des bosses importants.

En terrain plat, ou légèrement ondulé, la machine peut être portée par l'attelage avec utilisation du 3e point, mais en position flottante, par l'intermédiaire du by-pass à ses deux rouleaux, aux terrains comportant des creux et des bosses importants.

En terrain plat, ou légèrement ondulé, la machine peut être portée par l'attelage avec utilisation du 3e point, mais en position flottante, par l'intermédiaire du by-pass commandé par l'opérateur. Dans ce cas les rouleaux 4 et 5 évoluent librement sur le sol, comme une remorque, et l'opérateur peut régler en hauteur la lame niveleuse 6 à l'aide des vérins double effet 10, 10′, de manière à répartir les imperfections superficielles du terrain.

La figure 10 démontre aussi l'impossibilité d'utiliser une transmission à cardans dans les terrains très vallonnés, comme les bunkers de golf. Sur ces terrains, on conçoit qu'il est indispensable d'avoir un réglage en hauteur, manuel ou automatique, des outils 2, par les détecteurs de distance 13, 13′ réglés au départ par l'opérateur.

En pied de talus (position A) l'outil 2 doit être baissé pour toucher le sol, et en tête de talus (position B) l'outil 2 doit être relevé pour ne pas risquer de travailler à pleines dents.

Pour parfaire le nivellement, la lame niveleuse a été étudiée, comme indiqué précédemment, pour travailler dans tous les cas de figure, l'automatisme de l'ensemble permettant à l'opérateur de se concentrer sur l'utilisation de cette lame avec une seule manette agissant sur les vérins 10, 10′.

On conçoit également que dans le cas des forts vallonnements la machine ne peut pas être semi-portée mais traînée, car la distance entre le 3e point 15 et l'articulation 50 du vérin au tracteur peut varier dans des limites trop larges, par exemple de 0,30 m à 1,70 m, pour laisser celui-ci accouplé à la machine.

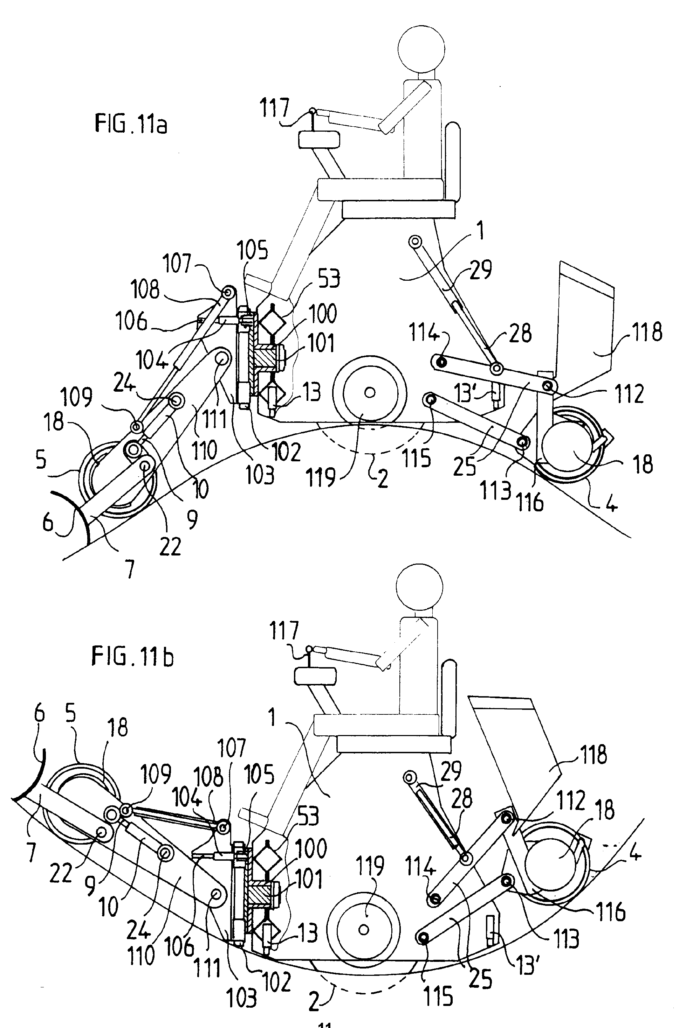

Si on se réfère maintenant aux figures 11a et 11b, on voit qu'une machine autonome selon l'invention comprend un moteur hydraulique 18 placé dans le rouleau 4, entraîné au moyen d'une pompe par un moteur non représenté placé sur le bâti principal à côté du conducteur, ce moteur pouvant être par exemple un moteur thermique, l'entraînement de l'outil 2 (herse ou houe) étant assuré par un moteur hydraulique 119.

Le réglage en profondeur et en inclinaison de l'outil 2 se fait au moyen des vérins avant 108 et arrière 29, soit à l'aide d'un manipulateur hydraulique 117 à deux manettes jumelées ou indépendantes commandées par l'opérateur, soit automatiquement par le truchement des détecteurs de distance 13, 13′ placés de chaque côté du bâti à l'avant et à l'arrière de ce dernier, les détecteurs de distance pouvant renseigner l'opérateur sur la position de l'outil à l'aide de voyants lumineux. Les tiges 28 des vérins 29 agissent sur la géométrie des bras 25 montés pivotants sur le bâti autour des axes 114, 114′ et 115, 115′ et reliés au châssis 116 du rouleau 4 par les axes 112, 112′ et 113, 113′, la différence de longueur des bras 25 ainsi que l'écartement des entraxes 114-115 sur le bâti et 112-113 sur le châssis assurant un minimum d'inclinaison du châssis 116 du rouleau 4 dans le franchissement des forts vallonnements, ce qui assure un travail correct en cas d'utilisation d'une engazonneuse 118 ou autre accessoire pouvant être fixé sur ledit châssis 116.

La direction est assurée par deux vérins hydraulique 104, 104′ commandés par deux pédales et qui font pivoter le palonnier 103 sur l'axe 102 du pivot 101 qui lui-même oscille librement sur le support 100 solidaire du bâti, cette disposition permettant aux deux rouleaux 4 et 5 d'épouser parfaitement la forme du terrain dans les dévers et changements de pente.

Le train avant 110 supportant le rouleau avant 15 et la lame niveleuse 6, pivote sur le palonnier 103 par l'intermédiaire des vérins 108, 108′ commandés par le manipulateur.

Ce mode de réalisation de la machine selon l'invention présente l'avantage d'être plus court, plus maniable, de pouvoir évoluer sur des terrains à forts vallonnements qui caractérisent les golfs conçus actuellement, et ce jusqu'à des rayons de 1m500 en mamelons ou cuvettes (5 mètres minimum avec un tracteur classique spécialement équipé). Il présente en outre l'avantage supplémentaire de pouvoir évoluer sur des pentes de 45° et travailler moins profond, n'ayant pas de traces de roue à décompacter, laissant de ce fait un terrain plus homogène et mieux plombé ne risquant pas de se déformer par le tassement naturel au fil du temps.

## Revendications

1. Machine préparatrice de sols du type comportant des moyens (2) de préparation du sol sur un bâti commun (1), un rouleau (4) monté derrière lesdits moyens (2), un rouleau avant (5) d'axe parallèle à celui du rouleau arrière (4) en terrain plat horizontal, monté devant lesdits moyens (2) et une lame niveleuse (6) montée sur un châssis pivotant (7,20,20′,21,21′) articulé sur le bâti (1) autour d'axes (22,22′,111) situés en arrière de l'axe du rouleau avant (5) de manière à permettre de régler la lame (6) en hauteur par rapport au plan contenant les axes des deux rouleaux (4, 5), caractérisée par des moyens (29, 108, etc) permettant de régler en permanence en cours de travail la profondeur de travail des moyens (2) de préparation du sol, lesdits moyens de réglage (29, 108, etc) étant commandés par l'intermédiaire de détecteurs de distance au sol (32, 13, 13′, 13˝).

2. Machine selon la revendication 1, dans laquelle les moyens (2) de préparation du sol sont réglables en hauteur par rapport au bâti (1) sur un support dont le déplacement est commandé par l'intermédiaire de détecteurs de distance au sol (32,13,13′,13˝).

3. Machine selon la revendication 2 dans laquelle les détecteurs de distance sont des détecteurs optiques (13,13′,13˝).

4. Machine selon la revendication 2 dans laquelle les détecteurs de distance sont des palpeurs consistant en un rouleau (32) évoluant à proximité immédiate devant les moyens (2) de préparation du sol.

5. Machine selon l'une quelconque des revendications 1 à 4, dans laquelle le châssis (20,20′,21,21′) porteur de la lame niveleuse (6) assure l'attelage au tracteur de la machine.

6. Machine selon la revendication 5, dans laquelle l'attelage est du type oscillant tous azimuts.

7. Machine selon la revendication 6, dans laquelle l'attelage oscillant est réalisé en reliant les bras de relevage (17, 17′) du tracteur à une pièce intermédiaire mobile (37) constituée-d'un plateau monté pivotant autour d'un axe (42) parallèle à la face avant du châssis (20,20′,21,21′) et coulissant perpendiculairement à cette face, des moyens mécaniques (44,44′,38,38′) ou vérins double effet (39, 40) permettant d'assurer le blocage de la pièce mobile (37) contre ladite face avant du châssis.

8. Machine selon l'une quelconque des revendications 1 à 4 utilisable sans tracteur, dans laquelle au moins un des rouleaux (4, 5) est moteur et l'autre inclinable par rapport à lui et désaxable horizontalement.

9. Machine selon l'une des revendications 1 à 8, dans laquelle les moyens de préparation du sol (2) sont inclinables par rapport au châssis sur un support (2′) commandé par un vérin double effet (29).

## Claims

1. Machine for soil preparation of a type comprising soil preparation means (2) on a common frame (1), a roller (4) mounted behind the said means (2), a roller (5) having an axis parallel to that of the back roller (4) on horizontal flat ground, mounted in front of the said means (2) and a grader blade (6) mounted on a pivoting chassis (7, 20, 20′, 21, 21′) articulated on the frame (1) around the axes (22, 22′, 111) situated behind the axis of the frontal roller (5) in such a way as to allow the height adjustment of the blade (6) with respect to a plane containing the axes of the two rollers (4, 5) characterised by means (29, 108, etc) allowing the continuous adjustment in the course of working of the depth of operations of the soil preparation means (2), the said adjustment means (29, 108, etc) being controlled by means of detectors of the distance from the soil (32, 13, 13′, 13˝).

2. Machine according to claim 1, in which the soil preparation means (2) are adjustable in height in connection with a frame (1) on a support, which displacement is controlled by means of detectors of the distance from the soil (32, 13, 13′, 13˝).

3. Machine according to claim 2, in which the distance detectors are optical detectors (13, 13′, 13˝).

4. Machine according to claim 2, in which the distance detectors are sensors consisting of a roller (32) moving in immediate proximity in front of the soil preparation means (2).

5. Machine according to any one of claims 1 to 4, in which the chassis (20, 20′, 21, 21′) carrying the grading blade (6) provides the coupling of the machine to a tractor.

6. Machine according to claim 5, in which the coupling is of a type moving in all azimuths.

7. Machine according to claim 6, in which the moving coupling is implemented in joining the raising arms (17, 17′) of the tractor to a mobile intermediary piece (37) composed of a plate mounted pivotally around an axis (42) parallel to the face in front of the chassis (20, 20′, 21, 21′) and sliding perpendicularly to this face, mechanical means (44, 44′, 38, 38′) or double action jacks (39, 40) allowing the operation of the locking of the mobile piece (37) against the said face in front of the chassis.

8. Machine according to any one of claims 1 to 4, operable without a tractor, in which at least one of the rollers (4, 5) is driving and the other is adjustable with respect to it and horizontally displaced.

9. Machine according to one of claims 1 to 8, in which the soil preparation means (2) are adjustable with respect to the chassis on a support (2′) controlled by a double action jack (29).

## Patentansprüche

1. Bodenbearbeitungsmaschine, umfassend Mittel (2) zur Bearbeitung des Bodens auf einem gemeinsamen Rahmen (1), eine hinter diesen Mitteln (2) angeordnete Walze (4), eine vordere Walze (5), deren Achse auf flachem horizontalem Gelände parallel zur Achse der hinteren Walze (4) verläuft und die vor den Mitteln (2) angeordnet ist sowie ein Räumschild (6), welches auf einem Drehchassis (7, 20, 20′, 21, 21′) angeordnet ist, welches an dem Rahmen (1) um Achsen (22, 22′, 111) schwenkbar befestigt ist, welche sich hinter der Achse der vorderen Walze (5) befinden, wodurch die Höhe des Räumschildes (6) bezüglich der die Achsen der beiden Walzen (4, 5) enthaltenden Ebene einstellbar ist, **gekennzeichnet durch** Mittel (29, 108 usw.), mit welchem während des Arbeitsvorgangs kontinuierlich die Arbeitstiefe der Mittel (2) zur Bodenbearbeitung regelbar ist, wobei diese Mittel zur Regelung (29, 108 usw.) mit Hilfe von Detektoren (32, 13, 13′, 13˝) für den Abstand zum Boden gesteuert werden.

2. Maschine nach Anspruch 1, bei der die Mittel (2) zur Bodenbearbeitung bezüglich des Rahmens (1) auf einem Träger höhenverstellbar sind, dessen Verschiebung mit Hilfe der Detektoren (32, 13, 13′, 13˝) für den Abstand zum Boden gesteuert wird.

3. Maschine nach Anspruch 2, bei der die Detektoren für den Abstand optische Detektoren (13, 13′, 13˝) sind.

4. Maschine nach Anspruch 2, bei der die Detektoren für den Abstand Tastfühler sind, welche eine Walze (32) umfassen, die unmittelbar vor den Mitteln (2) zur Bodenbearbeitung abrollt.

5. Maschine nach einem der Ansprüche 1 bis 4, bei der das Drehchassis (20, 20′, 21, 21′), welches das Räumschild (6) trägt, zur Ankupplung der Maschine an einen Traktor dient.

6. Maschine nach Anspruch 5, bei der die Ankupplung in alle Azimutwinkel oszillieren kann.

7. Maschine nach Anspruch 6, bei der die oszillierende Ankupplung verwirklicht ist durch Verbindung der Aushebearme (17, 17′) des Traktors mit einem beweglichen Zwischenstück (37), welches aus einer Platte besteht, die um eine parallel zur Vorderseite des Chassis (20, 20′, 21, 21′) verlaufende Achse (42) schwenkbar und senkrecht in diese Vorderseite einschiebbar ist, und aus mechanischen Mitteln (44, 44′, 38, 38′) oder doppelt wirkenden Stellzylindern (39, 40), welche die Blockierung des beweglichen Teils (37) gegen die genannte Vorderseite des Chassis gewährleisten können.

8. Maschine nach einem der Ansprüche 1 bis 4, welche ohne Traktor verwendbar ist, bei der mindestens eine der Walzen (4, 5) angetrieben ist und die andere Walze bezüglich dieser neigbar und horizontal versetzbar ist.

9. Maschine nach einem der Ansprüche 1 bis 8, bei der die Mittel zur Bearbeitung des Bodens (2) bezüglich des Chassis auf einem Träger (2′), welcher von einem doppelt wirkenden Stellzylinder (29) gesteuert wird, neigbar sind.
